Europäisches Patentamt

European Patent Office

Office européen des brevets

(11) Publication number: **0 432 853 A1**

# EUROPEAN PATENT APPLICATION

(21) Application number: 90203246.5

(22) Date of filing: 11.12.90

(51) Int. Cl.5: **C08F 240/00**

(30) Priority: 15.12.89 NL 8903079

(43) Date of publication of application:
**19.06.91 Bulletin 91/25**

(84) Designated Contracting States:
**AT BE CH DE DK ES FR GB GR IT LI NL SE**

(71) Applicant: **STAMICARBON B.V.**
**Mijnweg 1**
**NL-6167 AC Geleen(NL)**

(72) Inventor: **Salemis, Philippe**
**Boomkensdiep 50**
**NL-8032 XX Zwolle(NL)**
Inventor: **Wind, Ronald**
**Westenbergmate 22**
**NL-8014 MD Zwolle(NL)**

(54) Resin composition based on olefinically mono- and polyunsaturated aliphatic hydrocarbobn monomers with 5 and/or 6 carbon atoms and terpenes.

(57) Resin composition based on olefinically mono- and polyunsaturated aliphatic hydrocarbon monomers with 5 and/or 6 carbon atoms and terpenes.

The resin composition contains a substituted aromatic compound with at least one substituent, which is an alkyl group with between 1 and 20 carbon atoms.

EP 0 432 853 A1

# RESIN COMPOSITION BASED ON OLEFINICALLY MONO- AND POLYUNSATURATED ALIPHATIC HYDROCARBON MONOMERS WITH 5 AND/OR 6 CARBON ATOMS AND TERPENES

The invention relates to a resin composition based on olefinically mono- and polyunsaturated aliphatic hydrocarbon monomers with 5 and/or 6 carbon atoms and terpenes.

Such a resin composition is known from EP-A-132.291 which describes hydrocarbon resins based on olefinically mono- and polyunsaturated aliphatic hydrocarbon monomers with 5 and/or 6 carbon atoms, terpenes and olefinically unsaturated aromatic monomers, with a cyclopentadiene or dicyclopentadiene content of less than 2 wt.%. These hydrocarbon resins are used mainly in adhesives.

A disadvantage of this resin composition is that the miscibility with styrene-isoprene-styrene (SIS) block copolymers is insufficient, thus the tack of adhesives based on a mixture of these components is not optimum.

The aim of the invention is to provide a resin composition based on olefinically mono- and polyunsaturated aliphatic hydrocarbon monomers with 5 and/or 6 carbon atoms and terpenes which does not present the above disadvantage.

The resin composition according to the invention is characterized in that it contains a substituted aromatic compound with at least one substituent which is an alkylgroup with between 1 and 20 carbon atoms.

This results in a greatly improved miscibility with styrene-isoprene-styrene (SIS) block copolymers, and consequently in improved tack of adhesives based on these components.

A further advantage is the improved color of the resin composition.

Preferably the substituted aromatic compound is, toluene, xylene, cumene, isopropyltoluene and/or dodecylbenzene. These substituted aromatic compounds also serve as solvents.

Preferably the monounsaturated aliphatic hydrocarbon monomers with 5 and/or 6 carbon atoms are monoolefinic monomers with 5 and/or 6 carbon atoms of a petroleum distillate containing 20-50% monoolefinic monomers with 5 and/or 6 carbon atoms with a 2-methyl-2-butene content of 50% or more. It is also possible to use pure 2-methyl-2-butene as olefinically monounsaturated aliphatic hydrocarbon monomer with 5 and/or 6 carbon atoms. Other suitable monoolefines are, for example, 2-methyl-1-butene, 3-methyl-1-butene, 1-pentene, 2-pentene cyclopentene, hexene and 2-methyl-1-pentene.

Preferably hydrocarbon diolefines with 5 and/or 6 carbon atoms of a petroleum distillate containing hydrocarbon diolefines with 5 and/or 6 carbon atoms with a piperylene content of 50-95% are used as olefinically polyunsaturated aliphatic monomers with 5 and/or 6 carbon atoms. It is also possible to use pure piperylene as olefinically polyunsaturated hydrocarbon monomer with 5 and/or 6 carbon atoms. Another suitable diolefine is, for example, isoprene or a concentrate containing isoprene.

Preferably terpenes are terpenes present in turpentine containing 60-95% α- and/or β-pinene. It is also possible to use pure α-pinene as monomer. Other terpenes or concentrates thereof that can be used are, for example, β-pinene, α-limonene, δ-carene, allocymene and dipentene.

The resin composition is preferably based on:

a) 1-70 wt.% terpenes,

b) 20-70 wt% olefinically polyunsaturated aliphatic hydrocarbon units with 5 and/or 6 carbon atoms,

c) 20-50 wt.% olefinically monounsaturated aliphatic hydrocarbon units with 5 and/or 6 carbon atoms and

d) 1-25 wt.% substituted aromatic compounds, with at least one substituent which is an alkylgroup with between 1 and 20 carbon atoms,

a + b + c + d being 100% and the given composition containing less than 5 wt.% cyclopentadiene, dicyclopentadiene and/or methylcyclopentadiene.

More preferably, the resin composition is based on:

a) 1-35 wt.% terpenes,

b) 20-45 wt.% olefinically polyunsaturated aliphatic hydrocarbon units with 5 and/or 6 carbon atoms,

c) 20-45 wt.% olefinically monounsaturated aliphatic hydrocarbon units with 5 and/or 6 carbon atoms and

d) 5-10 wt.% substituted aromatic compounds, with at least one substituent which is an alkylgroup with between 1 and 20 carbon atoms,

a + b + c + d being 100% and the given composition containing less than 5 wt.% cyclopentadiene, dicyclopentadiene and/or methylcyclopentadiene.

The resin composition is preferably prepared by effecting a cationic polymerisation reaction at a temperature of between -30° C and 80° C in the presence of:

a) 1-70 wt.% terpenes,

b) 20-70 wt.% olefinically polyunsaturated aliphatic monomers with 5 and/or 6 carbon atoms and

c) 20-50 wt.% olefinically monounsaturated aliphatic monomers with 5 and/or 6 carbon atoms,

a + b + c being 100%, in a solvent that contains at least 50% by weight substituted aromatic compounds, with at least one substituent which is an alkylgroup with between 1 and 20 carbon atoms, relative to the total amount of solvents.

The amount of solvent is preferably between 20 and 70% by weight, more preferably between 35 and 55% by weight.

Besides the substituted aromatic compound, use may be made of aliphatic, alicyclic or chlorinated solvents.

Preferably, the reaction mixture contains 50-100 wt.% (relative to the aliphatic and terpenic monomers) substituted aromatic compound, with at least one substituent, which is an alkyl group with between 1 and 20 carbon atoms.

The temperature is preferably between 0°C and 60°C.

The pressure is between $10^5$ and $10^6$ Pa and is preferably atmospheric.

The resin composition is more preferably based on:

a) 1-10 wt.% terpenes,

b) 40-60 wt.% olefinically polyunsaturated aliphatic monomers with 5 and/or 6 carbon atoms and

c) 40-50 wt.% olefinically monounsaturated aliphatic monomers with 5 and/or 6 carbon atoms,

a + b + c being 100% in a solvent that contains at least 50% by weight substituted aromatic compound, with at least one substituent which which is an alkylgroup with between 1 and 20 carbon atoms, relative to the total amount of solvents, at a temperature of between -30°C and 80°C.

Suitable catalysts for the cationic polymerisation reaction include Friedel-Crafts catalysts, such as $AlCl_3$, $AlBr_3$, $TiCl_4$ and $BF_3$ and complexes thereof with nucleophiles, such as water, amines, alcohols, ethers and carboxylic acids. Preferably, use is made of $AlCl_3$.

Due to the exothermal nature of the reaction, cooling is required during the polymerisation reaction to maintain a constant temperature. After between 0.5 and 2 hours' reaction the catalyst is neutralized by washing with water and a hydroxide, after which solvent, unconverted starting material and oils are removed by vacuum distillation and stripping with $N_2$ at 240°C for 2 hours.

The resin composition according to the invention is a light yellow solid with a Gardner colour of between 1 and 10 (ASTM D 1544) and a softening point (ring and ball; ASTM E 28-64) of between 80°C and 120°C.

A suitable application of the resin composition according to the invention is in adhesives, for example in pressure-sensitive adhesives, for which purpose the resin composition is mixed with a natural or a synthetic rubber, in particular styrene-isoprene-styrene (SIS) and, optionally, a solvent. It is a great advantage that the resin composition according to the invention is well miscible with SIS. Preferably, between 30 and 65 wt.%, more preferably between 50 and 60 wt.% of the resin composition, is added to between 70 and 35 wt.%, more preferably between 40 and 50 wt.%, rubber to obtain an adhesive. To obtain pressure-sensitive hot melt adhesives use is made of a tackifying oil instead of a solvent.

The balance of the tack properties of pressure-sensitive adhesives, namely the peel strength properties (determined according to method PSTC-1) and the loop tack properties (determined according to the loop-tack test by method FTM-9) is excellent.

Other fields of application for the resin composition according to the invention are paint and printing ink which can be prepared by the conventional methods. Other applications include tires, labels, tapes and fabrics.

The invention is illustrated with the aid of the following examples, without, however, being limited thereto:

Example I
_____ -

10 parts by weight of $AlCl_3$ (powder) and 630 parts by weight of toluene were quickly introduced into a stirred 1.5-l reactor equipped with a cooler and a thermometer. The reactor then heated to 50°C, after which the monomer mixture of 122 parts by weight of toluene, 50 parts by weight of 95% pure piperylene, 50 parts by weight of 95% pure 2-methyl-2-butene and 5 parts by weight of terpene was added in two hours at a constant speed. The reactor was maintained at a temperature of 50°C by means of cooling. After all of the monomer mixture had been added, the mixture was stirred for 1/2 hour at 50°C, after which the catalyst was neutralized with potassium hydroxide. The resin was then washed with water and purged of solvent, oils and unconverted monomers.

Example II
_____

Example I was repeated, only now use was made of piperylene with a purity of 70%.

Example III

Example II was repeated, only now use was made of piperylene of 50% purity.

Comparative Experiment A

Example I was repeated, only now use was made of methylcyclohexane instead of toluene.

Resin properties

## Table I

| Example | I | II | III | A |
|---|---|---|---|---|
| R&B (°C)[1] | 96 | 97 | 94 | 100 |
| CP (°C)[2] | 53 | 53 | 53 | 65 |
| Mw | 1300 | 1680 | 1340 | 1960 |
| Mn | 910 | 1100 | 1230 | 1218 |
| I[3] | 1.4 | 1.5 | 1.4 | 1.61 |
| T(g) (°C) | 44 | 46 | 40.5 | 43 |
| Aromaticity (%)[4] | 8.12 | 7.43 | 7.1 | 6.76 |

where:

1) is the softening point (ring and ball) according to ASTM E 28-64;

2) is the Cloud Point;

3) is the Iodine value;

4) is the aromaticity determined with the aid of NMR.

For the determination of the peel strength and the execution of the loop-tack test the resin composition obtained according to any one of Examples I-III and comparative Experiment A was mixed with styrene-isoprene-styrene (SIS) block copolymer (Cariflex TR 1107, Shell) to obtain a pressure-sensitive adhesive composition and various resin : SIS ratios were tested. The resin composition obtained according to any one of Examples I-III and Comparative Experiment A and the SIS block copolymer were jointly dissolved in toluene and then applied to release paper, which was dried for 24 hours at room temperature and then weighed.

## Table II

### Loop-tack test (FTM 9) $(N/m^2 \times 10^4)$

| wt.% resin according to Example | 40 | 45 | 50 | 55 | 60 |
|---|---|---|---|---|---|
| I | | 92 | 96 | 118 | 128 | 100 |
| II | | 104 | 118 | 132 | 140 | 116 |
| III | | 92 | 112 | 120 | 132 | 156 |
| A | | 100 | 104 | 108 | 32 | 12 |

## Table III

### Peel strength (PSTC 1) $(N/m^2 \times 10^4)$

| wt.% resin according to Example | 40 | 45 | 50 | 55 | 60 |
|---|---|---|---|---|---|
| I | | 37.6 | 56.8 | 70.4 | 95.6 | 118.4 |
| II | | 44.0 | 68.0 | 76.0 | 96.0 | 124.0 |
| III | | 44.0 | 60.0 | 80.0 | 92.0 | 124.0 |
| A | | 68.0 | 92.0 | 96.0 | 116.0 | 92.0 |

These examples show that the resin composition according to the invention result in a good balance of the tack properties (namely the peel strength and the looptack) for any applied weight ratio between resin and rubber.

## Claims

1. Resin composition based on olefinically mono- and polyunsaturated aliphatic hydrocarbon monomers with 5 and/or 6 carbon atoms and terpenes, characterized in that the resin composition contains a substituted aromatic compound with at least one substituent, which is an alkyl group with between 1 and 20 carbon atoms.

2. Resin composition according to claim 1, characterized in that the substituted aromatic compound is toluene, xylene, cumene, isopropylene and/or dodecylbenzene.

3. Resin composition according to any one of claims 1-2, characterized in that the monounsaturated aliphatic hydrocarbon monomers with 5 and/or 6 carbon atoms are monoolefinic monomers with 5 and/or 6 carbon atoms of a petroleum distillate containing 20-50% monoolefinic monomers with 5 and/or 6 carbon atoms with a 2-methyl-2-butene content of 50% or more, and/or that the olefinically polyunsaturated aliphatic monomers with 5 and/or 6 carbon atoms are hydrocarbon diolefines with 5 and/or 6 carbon atoms of a petroleum distillate containing hydrocarbon diolefines with 5 and/or 6 carbon atoms with a piperylene content of 50-95% and/or that the terpenes are terpenes present in turpentine with 60-95% α- and/or β-pinene.

4. Resin composition according to any one of claims 1-3, characterized in that the resin composition is based on:

a) 1-70 wt.% terpenes,

b) 20-70 wt.% olefinically polyunsaturated aliphatic hydrocarbon units with 5-6 carbon atoms,

c) 20-50 wt.% olefinically monounsaturated aliphatic hydrocarbon units with 5-6 carbon atoms and

d) 1-25 wt.% substituted aromatic compounds, with at least one substituent which is an alkylgroup with between 1 and 20 carbonatoms

a + b + c + d being 100% and the given composition containing less than 5 wt.% cyclopentadiene, dicyclopentadiene and/or methylcyclopentadiene.

5. Resin composition according to claim 4, characterized in that the resin composition is based on:

a) 1-35 wt.% terpenes,

b) 20-45 wt.% olefinically polyunsaturated aliphatic hydrocarbon units with 5-6 carbon atoms,

c) 20-45 wt.% olefinically monounsaturated aliphatic hydrocarbon units with 5-6 carbon atoms and

d) 5-10 wt.% substituted aromatic compounds, with at least one substituent which is an alkylgroup with between 1 and 20 carbonatoms

a + b + c + d being 100% and the given composition containing less than 5 wt.% cyclopentadiene, dicyclopentadiene and/or methylcyclopentadiene.

6. Process for the preparation of a resin composition according to any one of claims 1-5, characterized in that, a cationic polymerisation reaction is carried out at a temperature of between -30°C and 80°C in the presence of: ·

a) 1-70 wt.% terpenes,

b) 20-70 wt.% olefinically polyunsaturated aliphatic monomers with 5-6 carbon atoms and

c) 20-50 wt.% olefinically monounsaturated aliphatic monomers with 5-6 carbon atoms,

a + b + c being 100%, in a solvent that contains at least 50% by weight, relative to the total amount of solvents, substituted aromatic compound, with at least one substituent which is an alkylgroup with between 1 and 20 carbon atoms.

7. Process according to claim 6, characterized in that the cationic polymerisation is effected in the presence of:

a) 1-10 wt.% terpenes,

b) 40-60 wt.% olefinically polyunsaturated aliphatic monomers with 5-6 carbon atoms and

c) 40-50 wt.% olefinically monounsaturated aliphatic monomers with 5-6 carbon atoms.

8. Process according to any one of claims 6-7, characterized in that the reaction mixture contains 50-100 wt.% (relative to the aliphatic and terpenic monomers) substituted aromatic compound with at least one substituent which is an alkylgroup with between 1 and 20 carbonatoms.

9. Adhesive composition based on a resin composition according to any one of claims 1-5 or on a resin composition obtained according to any one of claims 6-8.

10. Use of the resin composition according to any one of claims 1-5 or use of a resin composition obtained according to any one of claims 6-8.

Claims for the following Contracting State: ES

1. Process for the preparation of a resin composition, characterized in that, a cationic polymerisation reaction is carried out at a temperature of between -30°C and 80°C in the presence of:

a) 1-70 wt.% terpenes,

b) 20-70 wt.% olefinically polyunsaturated aliphatic monomers with 5-6 carbon atoms and

c) 20-50 wt.% olefinically monounsaturated aliphatic monomers with 5-6 carbon atoms,

a + b + c being 100%, in a solvent that contains at least 50% by weight, relative to the total amount of solvents, substituted aromatic compound, with at least one substituent which is an alkylgroup with between 1 and 20 carbon atoms.

2. Process according to claim 1, characterized in that the cationic polymerisation is effected in the presence of:

a) 1-10 wt.% terpenes,

b) 40-60 wt.% olefinically polyunsaturated aliphatic monomers with 5-6 carbon atoms and

c) 40-50 wt.% olefinically monounsaturated aliphatic monomers with 5-6 carbon atoms.

3. Process according to any one of claims 1-2, characterized in that the reaction mixture contains 50-100 wt.% (relative to the aliphatic and terpenic monomers) substituted aromatic compound with at least one substituent which is an alkylgroup with between 1 and 20 carbonatoms.

4. Process for the preparation of an adhesive composition by mixing 30-65% by weight of a resin composition obtained according to any one of claims 1-3 and 35-70% by weight of a natural or a synthetic rubber.

5. Use of the resin composition obtained according to any one of claims 1-3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | CHEMICAL ABSTRACTS, vol. 97, no. 22, November 1982, pages 40-41, abstract no. 183395c, Columbus, Ohio, US; & JP-A-82 36 108 (MITSUBISHI PETROCHEMICAL) 26-02-1982 * Abstract * | 1-5 | C 08 F 240/00 |
| D,Y | EP-A-0 132 291 (EXXON) * Claims 1-13 * | 1-5 | |
| Y | US-A-3 966 690 (G.W. MATHEWS) * Claims 1-3; column 2 * | 1-5 | |
| A | EP-A-0 318 217 (EXXON) * Claims 1-3 * | 1 | |
| A | EP-A-0 011 393 (EXXON) * Claim 1 * | 1 | |
| A | EP-A-0 013 060 (EXXON) * Claims 1-6 * | 1 | |

TECHNICAL FIELDS SEARCHED (Int. Cl.5)

C 08 F

The present search report has been drawn up for all claims

| Place of search | Date of completion of search | Examiner |
|---|---|---|
| The Hague | 30 January 91 | PERMENTIER W.A. |